# EUROPEAN PATENT APPLICATION

(11) **EP 4 736 975 A1**
(43) Date of publication of application: **06.05.2026**
(21) Application number: 24386123.4
(22) Date of filing: 01.11.2024
(51) Int. Cl.: B01D 1/28, B01D 3/00, B01D 3/14

(54) **CLOSED LOOP HEAT PUMP ASSISTED DISTILLATION FOR LIQUID MIXTURE SEPARATION**

(71) Applicant: Nederlandse Organisatie voor toegepast- natuurwetenschappelijk onderzoek TNO, 2595 DA 's-Gravenhage (NL); Technische Universiteit Delft, 2628 CN Delft (NL)
(72) Inventor: TYRASKIS, Ioannis, 2595 DA's-Gravenhage (NL); SARIC, Marija, 2595 DA's-Gravenhage (NL); ANSTIS, Olivia Kate, 2595 DA's-Gravenhage (NL); KISS, Anton Alexandru, 2600 AA Delft (NL); CUI, Chengtian, 2600 AA Delft (NL)
(74) Representative: V.O.

(57) **Abstract**

The disclosure pertains to distillation system comprising two columns operating at different pressure, a compressor, and a reboiler and a condenser that are heat integrated with each other.

## Description

### Field

The invention pertains to a heat integrated distillation system, in particular to a heat integrated distillation system comprising a (closed loop) heat pump assisted distillation unit. The invention also pertains to a process of separating a mixture comprising two liquid components in the heat integrated distillation system, in particular to the separation of methanol and water.

### Introduction

Distillation is one of the main separation technologies in chemical and petrochemical industries. However, the conventional distillation process has relatively low thermodynamic efficiency, typically below 20%, which makes the conventional distillation process energy intensive. According to Javed et al., Energies, 2022, 15, 6498, distillation accounts for 40-50% of the total plant operating cost in most refining and chemical processes. Accordingly, any improvement in thermodynamic efficiency of distillation process significantly increases overall process efficiency and decreases operational cost.

As increasing overall process efficiency is beneficial also from a cost perspective and from an environmental perspective, there is a desire to provide a distillation system and process with an improved efficiency to offer a distillation process with a reduced carbon footprint and an overall reduced operational cost.

Additionally, electrifying the distillation process is desired, to thereby eliminate the need for an external heat supply and be able to use only electricity as the energy source, and to thereby further reducing CO₂ emissions and energy expenses

Kiss et al., Energy, 2020, 203, 117788, reviews possible ways to reduce utilities consumption including the use of heat pumps, in particular in a heat integrated distillation column, cyclic distillation, reactive distillation, and dividingwall columns.

US 2014/0008207 A relates to a heat integrated distillation column comprising a stripping part, a rectifying part, and a compressor between the stripping part and the rectifying part, and a heat exchange channel assembly for transferring heat from the rectifying part to the stripping part. Fig. 1 of US 2014/0008207 A schematically shows that the heat transfer from the rectifying part to the stripping part is achieved by a direct heat transfer between the rectifying part to the stripping part of the heat integrated distillation column. By employing the channel assembly as shown in Fig. 5 of US 2014/0008207 A, improved heat transfer characteristics can be achieved compared to a plate-fin heat exchange assembly. However, the heat integrated distillation columns of US 2014/0008207 A still have limited heat transfer and thermodynamic efficiency, despite the structure of the heat exchange assembly.

EP 2644241 A relates to a heat integrated distillation apparatus comprising a stripping section, a rectifying section, a compressor, and a heat exchanger. The heat exchanger is provided in the stripping section, e.g. in a liquid sump unit, and has an inlet flow line for a compressed vapour stream from the stripping section and an outlet flow line for a condensed vapour stream, as shown in Fig. 7 of EP 2644241 A. The heat exchanger receives, e.g. in a tube bundle, the entire compressed vapour stream, which is supplied to the rectifying section via the heat exchanger. Thereby, the heat exchanger is a direct process-to-process heat exchanger heating a feed stream indirectly supplied to the liquid sump unit, in the stripping section and cooling the compressed vapour stream to yield a (partially or completely) condensed vapour stream supplied to the rectifying section.

Thereby, such distillation apparatus allows for heat integration within the distillation process, a reduction of the amount of heat which needs to be supplied to a boiler in the stripper section and a reduction in the amount of heat which needs to be withdrawn in a condenser in the rectifying section. However, the distillation apparatus of EP 2644241 A requires a plurality of the heat exchangers as described above, which increases capital expenditure of building the distillation apparatus and requires a significant amount of maintenance, and is difficult in control.

EP 2486965 A relates to a heat integrated distillation apparatus comprising a stripping column, a rectifying column, a compressor, a reboiler, a condenser, and a heat exchanger. Fig. 4 of EP 2486965 A teaches a heat exchanger provided in the rectifying column which is configured to receive a liquid stream withdrawn from the stripping column and to recycle it to the stripping column after a heat exchanging contact with a fluid stream in the rectifying column. Fig. 7 of EP 2486965 A teaches a heat exchanger provided in the stripping column which is configured to receive a fluid stream from the rectifying column and to recycle it to the rectifying column after a heat exchanging contact with a liquid in the stripping column. In both embodiments, the heat exchanger is configured as to act as a condenser and as a reboiler for the respective rectifying column and the stripping column, thereby reducing the utility usage of the condenser and the reboiler.

Hugill et al., Design of a commercial-scale heat-integrated distillation column based on plate-fin heat exchangers, 6th International Conference on Enhanced, Compact and Ultra-Compact Heat Exchangers: Science, Engineering and Technology, 17-21 September 2007, Potsdam (Germany), https://publicaties.ecn.nl/author/45275, describes a heat integrated distillation column for separating a propane-propene mixture. The column uses a relatively complex construction with plate-fin type heat exchangers.

There remains a desire for an improved heat integrated distillation system and distillation processes in terms of its energy efficiency, applicability to separation a wider range of mixtures, and ease of maintenance of such system.

### Summary

Accordingly, the invention is directed in a first aspect to a distillation system, in particular a heat pump assisted distillation system, the system comprising: a low pressure (LP) stripping column having an inlet for a feed mixture, a vapor outlet, a liquid outlet, and a vapor inlet; a reboiler for boiling a part of the liquid from the LP stripping column having a vapor outlet connected to said vapor inlet of the LP stripping column; a compressor connected to said vapor outlet of the LP stripping column, a high pressure (HP) rectifying column connected to receive vapor from the LP stripping column through said compressor, and having a vapor inlet for said vapor, a bottom liquid outlet connected to an inlet of the LP stripping column, a vapor outlet and a liquid inlet; a condenser for subjecting the vapor from the HP rectifying column to condensation at a pressure higher than the operating pressure of the LP stripping column, and having a liquid outlet for condensate, wherein a part of the condensate is re-introduced in an upper part of the HP rectifying column, wherein the condenser and the reboiler are in heat exchanging contact, preferably are provided as two heat exchanging compartments of a heat exchanger. Preferably, the LP stripping column and HP rectifying column are not heat integrated with each other; in particular, preferably the stages of the LP stripping column and the stages of the HP rectifying column are not heat integrated with each other.

In a preferred embodiment, the compressor is a multistage compressor comprising two or more stages, with intercooling provided by heat exchange against a liquid from the LP stripping column, preferably wherein the liquid is withdrawn from an upper part of the LP stripping column

Also provide is a heat pump assisted distillation process carried out in the system. Especially for the process, it is a preferred embodiment to have no heat integration between the LP stripping column and the HP rectifying column, in particular between the stages of the LP stripping column and the stages of the HP rectifying column

The disclosure pertains to distillation system comprising two columns operating at different pressure, a compressor, and a reboiler and a condenser that are heat integrated with each other.

### Brief description of the drawings

Figure 1 schematically illustrates an example of a heat integrated distillation system according to the invention.
Figure 2 schematically illustrates an example of a heat integrated distillation system according to the invention with multi-stage compression and intercooling.

Any embodiments illustrated in the figures are examples only and do not limit the invention.

### Detailed description

The invention provides a distillation system (apparatus), also referred to as a closed-loop heat pump assisted distillation system. The system comprises a low pressure (LP) stripping column, and a high pressure (HP) rectifying column. The LP stripping column has a vertical orientation and comprises an inlet for a feed mixture at an upper part, a vapor outlet at a top part, and a liquid outlet at a bottom part, and a vapor inlet at the bottom. The liquid outlet at the bottom part is connected to a reboiler having an outlet to supply vapor to the bottom of the LP stripping column. The liquid outlet of the LP stripping column is also connected to a liquid outlet where the high boiling point component (e.g. water) is withdrawn from the system; typically the reboiler accordingly has a liquid outlet where the liquid component is withdrawn (the bottom product). The vapor outlet at the top of the LP stripping column is connected, through a compressor, to a vapor inlet of the HP rectifying column. In particular, a multi-stage compression system, including interstage cooling is used. In a highly preferred embodiment, the system is configured such that heat released by the interstage cooling system is reused in the LP stripping column.

The HP rectifying column has a vertical orientation, and has a vapor inlet at a lower part, a liquid outlet at a bottom part, a vapor outlet at a top part, and a liquid inlet at an upper part. The vapor outlet of the HP rectifying column is connected to a condenser, the liquid outlet of the condenser is connected to said liquid inlet of the HP rectifying column and to a liquid outlet of the system for the lower boiling point component (the top product, e.g. methanol). The condenser is separate from the HP rectifying column, permitting a part of the formed condensate to be withdrawn and obtained as a product stream, called the top product.

The liquid outlet of the HP rectifying column is connected to a liquid inlet of the LP stripping column, through an expansion valve.

The LP stripping column comprises trays or plates and/or a packing.

In operation, the liquid feed mixture is received in the LP stripping column, falls down in the column, and is heated in the column by counter-current contact with the vapor flowing up (i.e. vapor from the reboiler), such that the lower boiling point component of the feed mixture (e.g. methanol) evaporates and the liquid obtains a higher concentration of the higher boiling point fraction (e.g. water). In the reboiler, a liquid is boiled that has a higher concentration (mol.%) of the high boiling point component than the feed mixture.

In the HP rectifying column, the compressed vapor flows up, in counter-current contact with a part of the liquid condensate formed in the condenser, which liquid condensate is colder than the compressed vapor. In this way, the high boiling point component (e.g. water) is transferred into the liquid phase in the HP rectifying column. Thereby, the vapor at the top outlet of the HP rectifying column has a higher concentration of the lower boiling point component (e.g. methanol) than the vapor at the bottom vapor inlet of the HP rectifying column. The concentration (mol.%) of the higher boiling point component (e.g. water) is higher in the liquid withdrawn from the HP rectifying column than in the compressed vapor.

The inventors found that for a distillation system with an LP stripping column with an outlet for a higher boiling point stream, an reboiler, a vapor compressor, a HP rectifying column, and a condenser to condense vapor withdrawn from the top of the HP rectifying column, with part of the condensate recycled to the top of the HP rectifying column and part of the condensate being supplied as the lower boiling point product, heat integration of the condenser and the reboiler provides for improved energy efficiency.

As an example, such heat integration is possible when the system is used for separating a methanol-water mixture and wherein the LP stripping column operates at 1 bar absolute and the HP rectifying column and the methanol condenser are operated at a sufficiently high pressure, e.g. at 6 bar absolute.

In conventional distillation systems, including the heat integrated distillation columns, a reboiler utilises steam or electricity to heat up a liquid stream from a distillation column or a stripping column (also referred to as a stripping section). A condenser, on the other hand, utilises a cooling medium to condense a vapor phase from the distillation column or a rectifying column (also referred to as a rectifying section). In known heat-integrated distillation columns, the rectifying section and the stripping section are provided in heat-exchanging contact, e.g. as compartments of a heat exchanger. Or, for example, liquid and vapor are extracted from various stages of an LP stripping column and HP rectifying column and external heat exchangers are used, in a known system.

An example of such a system is described in Hugill et al., Design of a commercial-scale heat-integrated distillation column based on plate-fin heat exchangers, 2007. The plate-fin heat exchanger used therein to provide the rectifying section and stripping section has a relatively complex construction.

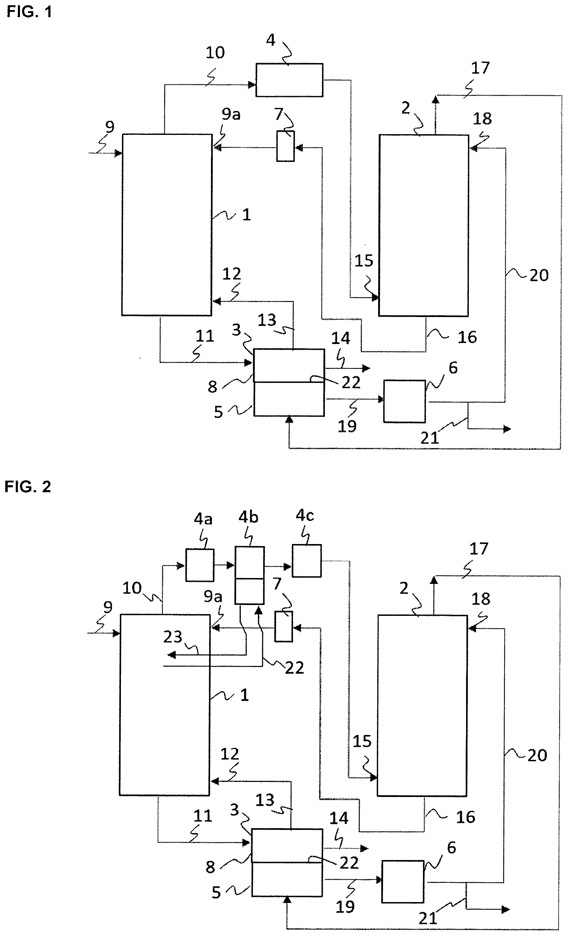

Shahandeh et al., Energy 80 (2015) 496 - 508, Figures 1E and 9E show a relatively complex system wherein vapor from a rectifier, that is in heat exchange with a stripper, is further compressed and supplied to a heat exchanger used as a reboiler, and then further cooled in a separate cooler. A first part of the liquid from the cooler is expanded and recycled to the rectifier. A second part is obtained as a product.

It is a judicious insight of the present invention that an amount of heat generated in the condenser and a temperature difference between the boiling point of the gaseous stream at given pressure of the HP rectifying column and the temperature of the liquid stream supplied to the reboiler advantageously allows for sufficient reboiling of the liquid stream supplied to the reboiler by process-process heat exchange between said streams. In particular, no heat integration between the stages of the LP stripping column and the HP rectifying column is necessary, especially if heat integration between the LP stripping column and an interstage cooler of the multistage compressor in the vapor line from the LP stripping column to the HP rectifying column is used. Thereby, a very energy efficient process is obtained permitting for a simple equipment setup, lowering the capital expenditure.

In particular, the inventors observed that condensation of the vapor stream originating from the HP rectifying column, which is an exothermic process, not only generates a sufficient amount of heat to heat up and vaporise a sufficient part of the liquid stream from the LP stripping column but also that the temperature at which said vapor stream from the HP rectifying column condenses is high enough, by virtue of the composition of the gas stream and its pressure, such that an efficient heat exchange is achieved between these streams. Accordingly, the amount of heat which needs to be supplied to the reboiler can be fully substituted by the amount of heat generated in the condenser, thereby reducing the energy use of the heat pump assisted distillation system. Furthermore, highly advantageously, the inventive system permits completely electrifying the column by eliminating the need for heat supply from an external heat source to the reboiler, e.g. without a need to import steam from an external source.

Furthermore, the inventors found that the inventive system as described above is particularly suitable for (but not limited to) separating water methanol mixtures, e.g. a methanol aqueous solution obtained after a renewable synthesis of methanol.

The inventors found that the inventive heat pump assisted distillation system very elegantly allows for an efficient heat recovery in distillation of methanol from a mixture with water, i.e. methanol distillation of mixtures comprising methanol and water. The inventive concept is, however, not limited to those compounds. Furthermore, a feed mixture comprising methanol and water may have a range of methanol to water ratios.

Further suitable liquid mixtures may include (but are not limited to), e.g., ethanol/water, benzene/toluene, *trans*/*cis* 2-butene. Generally, example suitable liquid mixtures could have similar relative volatility and similar temperature difference between the boiling points of the components.

The inventive system advantageously allows for reducing capital costs of building and installing the inventive system.

In the inventive system, it is not necessary to use plate-fin type heat exchanger.

The invention in an embodiment provides a distillation system, preferably a heat pump assisted distillation system. An example of such a system is shown in **Figure 1**. References to this figure are not limiting.

The system comprises an LP stripping column (1), a reboiler (3), a compressor (4), a HP rectifying column (2), and a condenser (5), and also a sub-cooler (6) and an expansion valve (7). The reboiler and condenser are provided as compartments of a heat exchanger (8).

The LP stripping column (1) has a first inlet for a feed mixture (9), a vapor outlet for vapor (10), a liquid outlet (11), and a vapor inlet (12). The vapor outlet is at a higher elevation than the first the liquid outlet is at the bottom. The vapor inlet is at a lower elevation than the first inlet. The LP stripping column is configured for counter-current contact of liquid and vapor, with liquid flowing down and vapor flowing up. The LP stripping column can also be referred to as an LP stripping unit. The term 'column' is used in a functional way.

The reboiler (3) is a compartment of heat exchanger (8) . The system comprises a connection for liquid from the liquid outlet (11) of the LP stripping column to the reboiler. In operation, vapor (13) is formed in the reboiler, which vapor is supplied to said vapor inlet (12) of the LP stripping column. The system comprises a connection for vapor from a vapor outlet of the reboiler to said vapor inlet of the LP stripping column. The reboiler is configured for gas/liquid separation (as illustrated), or comprises a gas/liquid separation unit in said connection from the reboiler to the vapor inlet. Non-evaporated liquid (14) is separated from the vapor and is purged. The system comprises an outlet for the non-evaporated liquid. The non-evaporated liquid is predominantly the higher boiling point component (e.g. water).

The compressor (4) is provided in the vapor flow line from the vapor outlet of the LP stripping column (10) to a vapor inlet (15) of the HP rectifying column (2) . The compressor is preferably a multi-stage compressor with intercooling. The one or more compressors are preferably electrical compressors.

The HP rectifying column (2) has a vapor inlet (15) at a bottom part, connected to receive compressed vapor from the compressor; and has a bottom liquid outlet (16), a top vapor outlet (17), and a condensate inlet (18) at an upper part. The system comprises a liquid flow line from said bottom liquid outlet to an inlet for liquid of the LP stripping column (said first inlet or an additional inlet), through an expansion valve (7). The liquid, rich in the high boiling point component, is recycled to the LP stripping column, e.g. to a second liquid inlet (9a) (as illustrated) or to the first liquid inlet (9). Also for the HP rectifying column, the term 'column' is used in a functional way and the term HP rectifying unit can also be used.

The system comprises a condenser (5) for subjecting the vapor (17) from the HP rectifying column to condensation. In operation, the pressure in the condenser is higher than in the LP stripping column and higher than in the reboiler. The condenser has an outlet for condensate (19) and the system comprises a liquid flow line (20) for condensate (19) from the condenser to said condensate inlet (18), typically through a further cooler (sub-cooler (6)). The sub-cooler is typically a heat exchanger, e.g. using cooling water. The system also comprises a purge line (21) for obtaining a part of the condensate as product.

The reboiler and the condenser are in heat exchanging contact, and are preferably as two heat exchanging compartments of a heat exchanger (8) (as illustrated). In particular, the reboiler and condenser are provided as two compartments that are separated by a heat-exchanging wall (22) . In operation, the wall is at one side exposed to the boiling liquid (at LP) and at the other side to condensing vapor (at HP), e.g. to boiling water and condensing methanol vapor. For instance, a shell-and-tube heat exchanger is used. Various configurations of the heat exchanger are possible.

Preferably, in the invention, the stages of the LP stripping column and HP rectifying column are not heat integrated. For example, the LP stripping column and HP rectifying column are not implemented as two heat exchanging compartments of a heat exchanger. Thereby advantageously more flexibility in the construction can be achieved. For example, the LP stripping column and the HP rectifying column are provided as two separate vessels that are not in direct heat exchanging contact.

In the inventive concept, it is not necessary that the LP stripping column and the HP rectifying column are heat-integrated with each other, e.g. directly heat-integrated. In and advantageous embodiment, these columns are not heat integrated, so as to permit a relatively simple design. It should be noted, however, that heat integration is not strictly excluded.

Preferably, the condenser operates at the same, or slightly lower, pressure than the HP rectifying column, e.g. max. 0.2 bar lower. Hence, preferably, the vapor from the HP rectifying column is not compressed between the HP rectifying column and the condenser. This permits for a simple design with only compression in the vapor transport line between the LP stripping column and the HP rectifying column. Moreover, in this embodiment, process control and operation are also simplified by having only a compressor for one vapor stream. It is observed that a multi stage compressor can be used for compressing vapor from the LP stripping column.

Preferably, the LP stripping column and the HP rectifying column are provided as two separate vessels. More preferably, these vessels are not in direct heat exchanging contact. Preferably, these vessels do not have a shared wall, in particular no shared heat-exchanging wall.

Preferably, at least 30 wt.% or at least 40 wt.%, or at least 50 wt.%, e.g. up to 70 wt.% of the liquid from the bottom liquid outlet of the LP stripping column is vaporized in the reboiler, i.e. by the heat integration with the condenser. Vaporizing a relatively large part of the liquid in the reboiler has the advantage that a large part of the heat input in the LP stripping column is provided by the reboiler, and hence by heat integration with the condenser. The maximum percentage vaporized liquid ensures that sufficient separation is achieved, e.g. sufficient liquid water is purged, withdrawn from the system, through the LP stripping column bottom outlet.

Hence, in a preferred embodiment, the compressor is a multistage compressor comprising two or more stages, with intercooling provided by heat exchange against a liquid from the LP stripping column, preferably wherein the liquid is withdrawn from an upper part of the LP stripping column. Preferably, the system comprises a liquid flow line for a liquid from the intercooling heat exchanger to the LP stripping column, and a liquid flow line from the LP stripping column to the intercooling heat exchanger.

The compressor for vapor from the LP stripping column is preferably a multistage compressor comprising two or more stages, with more preferably intercooling, i.e. with an interstage cooler. The interstage cooler is typically a heat exchanger.

Highly preferably, the interstage cooling is provided by heat exchange against liquid from the LP stripping column. Hence, preferably the interstage cooler is a heat exchanger, receiving a gas stream (vapor) from a compressor stage (and having an outlet for cooled gas connected to a downstream compressor stage), and receiving a liquid stream from the LP stripping column, more preferably from a tray and/or a packing in an upper part of the LP stripping column. Thereby the relatively cold liquid from the LP stripping column is heated and is supplied back to the LP stripping column, preferably to the same tray and/or packing height.

Advantageously, providing the interstage cooling advantageously allows for even more efficient heat integration in the process and reducing the operational costs of the process by heating the liquid stream of the LP stripping column in the interstage cooler.

The compressor is preferably an electrical compressor.

Preferably, the LP stripping column is operated at 1.0 - 1.5 bara (bar absolute).

Preferably, the HP rectifying column is operated at a pressure of at least 3.0 bar higher than the LP stripping column, or at least 4.0 bar higher.

Preferably, the HP rectifying column is operated at a pressure of at least 4.5 bara, or at least 5.0 bara, or at least 5.5 bara. Preferably, the condenser operates at the same pressure, or max. 0.2 bar lower than the HP rectifying column. Preferably, the compressor (single stage or multi stage) compresses the gas to the pressure of the HP rectifying column.

**Figure 2** shows an embodiment with interstage cooling. Reference numerals are the same as in Fig. 4, unless specified otherwise. The compressor comprises a first compressor (4a), an interstage cooler (4b) and a second compressor (4c) arranged in series. The interstage cooler is a heat exchanger receiving the hot compressed gas in a first compartment and receiving liquid (22) from the LP stripping column in a second compartment. Liquid (23) is recycled from the second compartment to the LP stripping column.

The process is a distillation process, carried out in the inventive system; in the process the heat integration of the LP stripping column (stages) and the HP rectifying column (stages) is preferably omitted.

The process comprises supplying a feed stream to the liquid inlet of the LP stripping column. The feed stream comprises a mixture of a first liquid component and a second liquid component, and hence comprises a liquid phase comprising the first component and the second component.

The process furthermore comprises compressing vapor from the LP stripping column in the compressor (e.g. multi-stage compression) and supplying a compressed gas stream to the HP rectifying column.

In the process, at least a part of the liquid from the LP stripping column is heated in the reboiler, and the process involves purging a part of the liquid from the LP stripping column before or after heating in the reboiler.

In the process, vapor from the HP rectifying column is condensed in the condenser to give a condensate, obtaining a part of the condensate as product, and supplying a part of the condensate to the liquid inlet of the HP rectifying column. Preferably, all vapor from the top vapor outlet of the HP rectifying column is supplied to the condenser, and preferably the condensation is at least 99 % complete in the condenser that is part of the heat exchanger with the reboiler.

The difference in the boiling point, at a pressure of 1.0 bar absolute, of the first component and the second component of the feed mixture is for example at least 25°C, e.g. between 25°C and 50°C.

Preferably, the mixture is a methanol and water mixture. Such mixtures are formed e.g. during methanol synthesis, e.g. methanol synthesis by CO₂ hydrogenation. CO₂ hydrogenation for methanol synthesis is a very interesting renewable / green technology. Preferably, the H₂ for COz hydrogenation is produced by water electrolysis. Especially in this context, the methanol synthesis plant may have no steam export, such that no steam is available for heating in the reboiler.

For example, the feed mixture comprises water and methanol in a molar ratio in the range 2:1 to 1:5, or e.g. 2:1 to 1:2, e.g. about 1:1 molar ratio. The feed mixture comprises e.g. at least 90 wt.% liquid and e.g. less than 10 wt.% vapor.

For example, the feed mixture comprises at least 90 wt.% or at least 99 wt.% methanol and water in total relative to the total liquid feed mixture.

The methanol and water feed mixture is e.g. available at 1.0 - 1.5 bara and/or at a temperature of 40 - 80°C, e.g. about 50 - 70°C.

Preferably, in such embodiments, the methanol condensate from the condenser is at least 99 mol.% methanol, or at least 99.9 mol.% methanol. Higher purities are also possible and preferable due to the expected energy savings.

Preferably, at least 90 wt.% of the condensate is formed in a condenser that is supplying heat to the reboiler.

In a preferred embodiment, the feed mixture is a methanol and water mixture, the LP stripping column is operated at a pressure of 1.0 to 1.5 bar and the HP rectifying column is operated at a pressure of at least 5 bar, e.g. in the range 5.0 - 10.0 bar. For example, the pressure is at least 6.0 bar. The skilled person can set the pressure of the HP rectifying column and the degree of compression of the compressor sufficiently high to ensure that the condensation temperature of the low boiling point component (methanol) in the condenser is at least 5°C or at least 10°C higher than the boiling temperature of the high boiling point component (water) in the reboiler, thereby ensuring appropriate heat transfer from the condenser to the reboiler.

### Examples

The invention will now be further illustrated by the following non-limiting examples. These examples do not limit the invention and do not limit the claims. In both examples, the feed composition reflects a typical output from methanol synthesis in an e-methanol production route via pure CO₂ hydrogenation. E-methanol refers to methanol produced from electricity (e.g. solar or wind energy) and captured COz. The scope of the invention is however not limited to these sources of the water/methanol mixture.

### Example 1

A distillation process was simulated as follows, using the configuration of Fig. 2. A feed mixture of 71 ton/h (4 wt.% vapor) (50 mol.% water, 50 mol.% methanol, minor H₂; i.e. 36.7 wt.% water and 63.3 wt.% methanol) was received at the upper inlet of the LP column at 1.0 bar; there was also 28.6 ton/h recycle fluid stream received from the HP column. The temperature of the feed was 84 °C.

From the bottom of the LP stripping, 62 ton/hr liquid (99.9 wt% water) was withdrawn at 103°C and 1.1 bara and supplied to the reboiler, where it was in part evaporated to give 36 ton/h vapor. The vapor was re-introduced in the bottom of the LP stripping column; the non-evaporated 26 ton/h water was purged. Hence, about 60 % of the liquid was evaporated in the reboiler, by the heat exchange with the methanol condenser.

From the LP stripping column top, 74 ton/h vapor is withdrawn with approximate composition 21 mol.% HzO, 78 mol.% methanol (13.3 wt.% water, 86.7 wt.% methanol).

The vapor is compressed in a first compressor stage to 3 bara., with interstage cooling in a heat exchanger, and then in a second compressor stage to 6 bar, and delivered the bottom of the HP column at 6.1 bar abs. The gas (vapor) temperature increased from 77°C to 176°C by the first compressor stage, the interstage cooling was to 110°C, the temperature increased to 186°C by the second compression stage. The interstage cooling was conducted by heat exchange of liquid looped from and to the LP stripping column, thereby heating said liquid. Specifically, the heat exchange was from and to the 4^{th} stage of the LP stripping column.

From the bottom of the HP rectifying column, 29 ton/h liquid of 133°C and 6.1 bar was withdrawn with composition 66.05 wt. % methanol, 33.95 wt.% water, and expanded at to 1 bar and 103°C. The expansion resulted in two-phase stream with 26 wt.% vapor. Both expanded streams were supplied to an upper part of the LP stripping column.

From the top of the HP rectifying column, 81.9 ton/ h vapor was obtained with composition 99.84 wt.% methanol, 0.15wt% water, at 6.0 bar, at the outlet of the column and at the inlet of the condenser part of the heat exchanger that provided the condenser and the reboiler as two heat-exchanging compartments.

In the condenser compartment, substantially complete methanol condensation was effected. The temperature at the outlet of the condensation compartment was 118°C and the pressure was 6 bar abs. The resulting methanol was further cooled in a sub-cooler to 50°C and 37 ton/h of the methanol condensate was returned to the top of the HP rectifying column at 50°C and 45 ton/h was obtained as liquid methanol product with purity 99.8 wt.%.

In the HP rectifying column, counter-current contact between incoming compressed gas of 186°C and the returned 37 ton/h methanol condensate having a temperature of 50°C resulted in a partial evaporation of methanol condensate, and cooling of the gas stream resulting in condensation of water.

A heat balance was achieved between the methanol condensation, the water evaporation in the reboiler, and the vaporisation in the LP stripping column, further using the heat exchange with the interstage cooling.

With the methanol condensation temperature at 6 bara being sufficiently higher than the water boiling temperature at 1 bara (namely methanol 6 bar: 123°C, water 1 bar: 100°C), heat integration of the methanol condenser and reboiler is possible.

The coefficient of performance (COP) is 4.3, calculated as ((reboiler duty + interstage cooling duty) / compressor power). It is noted that the simulation also included heat integration of the interstage cooler with the LP stripping column.

### Example 2

A simulation of process was simulated as follows, using the configuration in Fig. 2.

A methanol/water feed mixture of 77.8 t/h was used, (0 wt.% vapor) (54.25 mol% water - 45.75 mol% methanol, i.e. 40 wt.% water - 60 wt.% methanol) was received at the upper inlet of the LP column at 1 bar; there was also 48.3 ton/h recycle received from the HP column. The temperature of the feed was 74 °C.

Bottom liquid leaving LP stripping column and going to the reboiler is 80.7 t/h (99.95 wt.% water) at 103°C and 1 bar. The purge (99.99 wt.% water) collected after reboiler is 31 t/h and the vapor recycled back from the reboiler to LP stripping column is 49.7 t/h. Hence, 60 % of the liquid was evaporated in the reboiler.

From the LP stripping column top, 74 ton/h vapor is withdrawn with approximate composition 13.4 wt.% water, 86.6 wt.% methanol (21.6 mol% water 78.4 mol% methanol).

The vapor is compressed in a first compressor stage to 3 bara., with interstage cooling in a heat exchanger, and then in a second compressor stage to 6 bar, and delivered the bottom of the HP column at 6 bar abs. The gas (vapor) temperature increased from 73 °C to 169 °C by the first compressor stage, the interstage cooling was to 102 °C, the temperature increased to 177 °C by the second compression stage. The interstage cooling was conducted by heat exchange of liquid looped from and to the LP stripping column, thereby heating said liquid. Specifically, the heat exchange was from and to the 4^{th} stage of the LP stripping column.

From the bottom of the HP rectifying column, 48 ton/h liquid of 127 °C and 6.1 bar was withdrawn with composition 73.8 wt.% methanol, 26.2 wt.% water, and expanded to 1 bar (72 °C after expansion). The expansion resulted in a biphasic stream with 19.7 wt.% vapor. The biphasic stream was supplied to an upper part of the LP stripping column.

From the top of the HP rectifying column, 118 ton/ h vapor was obtained with composition 99.93 wt.% methanol, 0.07 wt.% water, at the outlet of the column and at the inlet of the condenser part of the heat exchanger that provided the condenser and the reboiler as two heat-exchanging compartments.

In the condenser compartment, substantially complete condensation was effected. The temperature at the outlet of the condensation compartment was 118°C, the pressure was 6 bar abs and the mass vapor fraction was 3 %. A further condenser of minor duty equal to 0.8 MW was used for the complete condensation of the outlet stream. The resulting product stream had a composition of 99.85 wt.% methanol and 0.15 wt.% water. 71.2 t/h of the methanol condensate was returned to the top of the HP rectifying column at 118 °C and 46.75 ton/h was obtained as liquid methanol product with purity 99.85 wt.%.

With the methanol condensation temperature at 6 bara being sufficiently higher than the water boiling temperature at 1 bara (namely methanol 6 bar: 123°C, water 1 bar: 100°C), heat integration of the methanol condenser and reboiler is possible.

The heat exchange duty in the heat exchanging compartment between the two columns is 31 MW. The duty of the first and second compressor stage is 4 MW and 3.2 MW, respectively. The intercooling is 3 MW, and it can be done using air or water. The coefficient of performance (COP) is 4.3, calculated as ((reboiler duty + interstage cooling duty) / compressor power).

Certain terminology is used in the present disclosure as follows.

The heat pump assisted distillation system also referred to as a closed-loop heat pump assisted distillation system, can also be referred to as an apparatus, a unit or section, that comprises at least an LP stripping column, a compressor, an HP rectifying column, and a heat exchanger providing the reboiler and the condenser, as discussed hereinabove.

Broadly, the term "heat pump assisted distillation system" may be understood as a heat pump assisted distillation apparatus or a closed-loop heat pump assisted distillation apparatus. The term "system" as used herein refers to a physical entity, such as a section of the chemical plant comprising a plurality of units (apparatuses) in a specific configuration with respect to each other.

The LP stripping column may be alternatively referred to as an LP column, a stripping column, and a first column. In an embodiment, the stripping section or zone comprises and/or is provided as the LP stripping column. The HP rectifying column may be alternatively referred to as an HP column, a rectifying column, and a second column. In an embodiment, the rectifying section or zone comprises and/or is provided as the HP rectifying column.

The terms "low pressure" and "high pressure" with respect to an apparatus unit is used as an indication of the intended pressure at which said unit is designed to be operated, relative to each other, and can also be referred to as a first pressure and a second pressure, the second pressure being higher than the first pressure.

The top, the bottom, the lower, and/or the upper part of an apparatus, e.g. the LP stripping column and/or the HP rectification column, is defined with respect to gravity in the vertical orientation of said apparatus, unless the orientation of the apparatus is defined as the horizontal orientation.

The higher boiling point component can be referred to as the first liquid component (e.g. water); the lower boiling point component as the second liquid component (e.g. methanol); the first liquid component has a higher boiling temperature (at 1 bara) than the second liquid component.

All pressure are absolute pressures unless specified otherwise. Bara indicates absolute pressure in bar (100 kPa).

## Claims

1. A heat pump assisted distillation system comprising:
- a low pressure (LP) stripping column having an inlet for a feed mixture, a vapor outlet, a liquid outlet, and a vapor inlet;
- a reboiler for boiling a part of the liquid from the LP stripping column having a vapor outlet connected to said vapor inlet of the LP stripping column;
- a compressor connected to said vapor outlet of the LP stripping column,
- a high pressure (HP) rectifying column connected to receive vapor from the LP stripping column through said compressor, and having a vapor inlet for said vapor, a bottom liquid outlet connected to an inlet of the LP stripping column, a vapor outlet and a liquid inlet;
- a condenser for subjecting the vapor from the HP rectifying column to condensation at a pressure higher than the operating pressure of the LP stripping column, and having a liquid outlet for condensate, wherein a part of the condensate is re-introduced in an upper part of the HP rectifying column;
wherein the condenser and the reboiler are in heat exchanging contact, preferably are provided as two heat exchanging compartments of a heat exchanger,
and wherein the stages of the LP stripping column are not heat integrated with the stages of the HP rectifying column.

2. The system according to claim 1, wherein the compressor is a multistage compressor comprising two or more stages, with intercooling provided by heat exchange against a liquid from the LP stripping column, preferably wherein the liquid is withdrawn from an upper part of the LP stripping column.

3. The system according to claim 2, comprising a liquid flow line for a liquid from the intercooling heat exchanger to the LP stripping column.

4. The system according to any of the preceding claims, wherein the LP stripping column and the HP rectifying column are provided as two separate vessels that are not in direct heat exchanging contact.

5. The system according to any of the preceding claims, wherein the compressor is an electrical compressor.

6. A heat pump assisted distillation process carried out in the system according to claim 1, preferably having features of any of claims 2 to 5, the process comprising:
- supplying a feed stream comprising a liquid mixture of a first liquid component and a second liquid component to the LP stripping column,
- heating at least a part of the liquid from the LP stripping column in the reboiler, and purging a part of the liquid from the LP stripping column before or after heating in the reboiler,
- compressing vapor from the LP stripping column in the compressor and supplying a compressed gas stream to the HP rectifying column,
- condensing vapor from the HP rectifying column in the condenser to give a condensate, obtaining a part of the condensate as product, and supplying a part of the condensate to the liquid inlet of the HP rectifying column.

7. The process according to claim 6, wherein at least 90% of the condensate formed in the condenser is formed in heat exchange with the reboiler.

8. The process according to claim 6 or 7, wherein at least 30 wt.% of the liquid from the LP stripping column is vaporized in the reboiler, by the heat exchange with the condenser, to form a vapor that is supplied to the vapor inlet of the LP stripping column, preferably at least 40 wt.% of the liquid or at least 50 wt.% of the liquid is vaporized.

9. The process according to any of claims 6-8, wherein the mixture is a methanol and water mixture.

10. The process according to any of claims 6-9, wherein the rectifying section is operated at a pressure at least 3 bar higher than the stripping section.

11. The process according to any of claims 6-10, wherein the feed mixture is a methanol and water mixture, wherein the LP stripping column is operated at a pressure of 1.0 to 1.5 bar and the HP rectifying column is operated at a pressure of at least 5 bar.
